# EUROPEAN PATENT APPLICATION

(11) **EP 4 428 062 A1**
(43) Date of publication of application: **11.09.2024**
(21) Application number: 24160380.2
(22) Date of filing: 28.02.2024
(51) Int. Cl.: B65G 1/04, B65G 47/90

(54) **HANDLING UNIT**

(30) Priority: 07.03.2023 IT 202300004122
(71) Applicant: Label Elettronica S.R.L., 35010 Limena (PD) (IT)
(72) Inventor: RAMI, Enrico, 36047 MONTEGALDA VI (IT)
(74) Representative: Modiano, Micaela Nadia

(57) **Abstract**

A handling unit (10), comprising a gripper device (11) provided on a supporting plate (12) for products, the gripper device (11) comprising:
- two opposite longitudinal grip blades (13, 14), which can move independently of each other, each one of the blades (13, 14) having a free end (13a, 14a),
- first translation means (15) of the blades (13, 14) in a first direction (X) which is parallel to the direction of extension of the blades (13, 14),
- second translation means (16) of the blades (13, 14), in a second direction which is perpendicular to the first direction (X) and lies on a plane which is parallel to the plane of arrangement of the plate (12),
- means (17) for the controlled mutual approach/distancing of the free ends (13a, 14a) of the blades (13, 14); and
retractable means (18a, 18b) for engagement on the blades (13, 14) for the products.

## Description

The present invention relates to a handling unit for moving products, of any shape and size, in a warehouse.

The invention can be applied in the sector of warehouses for logistics, pharmaceuticals and/or industrial production, automated or otherwise.

Nowadays the use is known of robotized warehouses for managing packages of products.

The current state of the art in robotized systems for managing the storage of any category of products of widely varying shapes, sizes and weights in the sectors of intralogistics, industrial production and e-commerce is represented by "Goods-To-Person" systems (GTP).

GTP systems follow an order preparation strategy wherein the goods are brought directly to the operator by means of automated systems.

In this manner, the operator receives, at a collection station, the products required to make up an order, without the need to move from his or her position.

In such systems the constant presence of many operators is necessary, in both the loading step and in the picking step.

In fact GTP systems need to be continuously supplied, manually, in the step of loading products and also during the steps of collection, picking, and making up orders, since only those containers are moved which contain not only the category/type of product with the searched-for code, but possibly products with other codes as well.

Furthermore, the item requested is rarely stored in the exact quantity needed to dispatch specific orders, but the items are normally on hand in greater quantities than needed for the average order and probably in sufficient numbers to meet several orders, which are usually not consecutive.

This results therefore in the continuous necessity, during the steps of making up orders, for one or more operators (even tens of operators) to manually pick the items requested, in the exact quantities, and to place them (again manually) in a container dedicated to the specific order being dispatched.

Furthermore, it is the responsibility of the operator to confirm the correct item is collected by reading the corresponding bar codes (or other form of code) of the product, and to replace any excess fractions/quantities in the container of origin.

Following the previous operations, the operator manually controls the reloading of the container from which he or she has just picked the product with the specific code, in the quantities required by the specific order being dispatched.

The result is therefore a workflow that is continuously assisted by dedicated operators, in which one or more employees, even during the steps of order picking/preparation, have to work together with the machines in order to execute these activities. Furthermore it is necessary to manually load the containers with the products to be handled in the automated storage system, which are only subsequently stored automatically in the warehouse.

The procedure for loading automated GTP systems can occur only in an assisted manner, with the presence of one or more operators, who work in parallel with each other and with the machines of the automated facility.

It is therefore a low-efficiency system in terms of use of human resources, since it requires the constant presence of a large number of operators in all the operative steps of the system.

An additional limitation is the low performance in the speed of picking and preparing orders, since only the containers from which the products need to be picked can be moved, and subsequently these containers, empty or containing partial quantities, will need to be put back into the system.

Also, the steps of loading products are slow and laborious given that the operators need to read the code of every single product before placing it in the specific container which subsequently will need to be loaded.

Furthermore, in consideration of the high number of manual operations required in the various steps from loading to picking/preparation, the entire process is exposed to the risk of human error owing to distraction or the like.

The energy consumption and wear of the various mechanical and electrical components is considerable, given the continuous need, even during the steps of preparing orders, to move the containers.

Some automated storage systems normally have shelving, optionally provided with chutes that are inclined with respect to the horizontal plane, in which the packages of products are stored by a handling unit.

The packages indicated by the operator are automatically expelled, on demand, from these channels.

In order to supply the inclined chutes, the handling unit takes the packages from a conveyor belt or from storage shelves, called low product rotation storage, and places them in the channels of the shelving unit or discharges them into the specific chute to be picked directly by the operator.

The handling unit is moved by translation means that position it at the conveyor belt, at the storage shelves or at the inclined chutes.

Nowadays handling units are known and widespread which rotate on a vertical axis so that they can be oriented to face, alternately:
- the storage shelves or conveyor belt, from which to grip the packages,
- or the channels into which to discharge the gripped packages.

A need that is particularly felt today in the field of robotized warehouses is that of ensuring an effective hold, or grip, of the packages for their movement by the handling unit.

Usually in order to grip the packages, the handling unit is equipped with a gripper device.

This gripper device is generally arranged on a plate on which the packages to be moved are placed, which in turn is supported by an assembly for moving the handling unit.

The gripper device comprises:
- two mutually opposite grip blades, which are constituted by platelike bars arranged substantially at right angles to the arrangement of the supporting plate,
- first translation means for such blades, for translating in a first direction, defined as the direction toward a facing conveyor belt or a storage shelf,
- second translation means for such blades, for translating the blades in a second direction, defined as the direction perpendicular to the first direction, toward each other in order to grip one or more packages, and also away from each other in order to release the packages, once loaded on or unloaded from the supporting plate.

In particular, the second translation means of the blades can also move one blade independently of the other.

The length of the blades is such that they can be inserted between two rows of packages on a shelving unit up to a depth that corresponds to the depth of that shelving unit, generally in the order of a few tens of centimeters, up to even one meter, so as to ensure the grip of the package placed on the shelving unit in the region furthest from the supporting plate of the handling unit.

This conventional technique too has some aspects that show room for improvement.

In fact, with conventional handling units, even by generating an appreciable pressure with the blades, it is difficult to perform a secure and stable grip of products of considerable weight and dimensions.

Furthermore, with conventional handling units it is not possible to generate a localized pressure on the blades of the gripper device only at the product of interest, nor is it possible to vary such pressure according to the weight and volume of the product to be moved.

Also, with conventional handling units it is an inconvenient and complicated matter to push products of considerable volumes and dimensions during loading or picking.

The aim of the present invention is to provide a handling unit which is capable of improving the known art in one or more of the above-mentioned aspects.

Within this aim, an object of the invention is to provide a handling unit which is capable of handling a wide variety of products, from the considerably large to the particularly small.

Another object of the invention is to provide a handling unit which makes it possible to perform a secure and stable grip of products of considerable weight and dimensions, using a pressure that is less than that necessary in similar, conventional handling units.

Another object of the invention is to provide a handling unit which makes it possible to generate a localized pressure on the blades of the gripper device only at the product of interest, and to vary such pressure according to the weight and volume of the product to be moved.

A further object of the invention is to provide a handling unit which makes it possible to push products, even of considerable dimensions, easily and quickly during loading or picking.

Another object of the invention is to provide a handling unit which makes it possible to reduce the need for, and the number of, operators in the warehouse.

A further object of the present invention is to overcome the drawbacks of the known art in an alternative manner to any existing solutions.

Another object of the invention is to provide a handling unit that is highly reliable, easy to implement and at low cost.

This aim and these and other objects which will become better apparent hereinafter are achieved by a product handling unit, comprising a gripper device provided on a supporting plate for said products, said gripper device comprising:
- two opposite longitudinal grip blades, which can move independently of each other, each one of said blades having a free end,
- first translation means of said blades in a first direction which is parallel to the direction of extension of said blades,
- second translation means of said blades, in a second direction which is perpendicular to said first direction and lies on a plane which is parallel to the plane of arrangement of said plate,
- means for the controlled mutual approach/distancing of the free ends of said blades,
said handling unit being characterized in that it comprises retractable means for engagement on said blades for said products.

Further characteristics and advantages of the invention will become better apparent from the detailed description that follows of a preferred, but not exclusive, embodiment of the handling unit according to the invention, which is illustrated for the purposes of non-limiting example in the accompanying drawings, wherein:

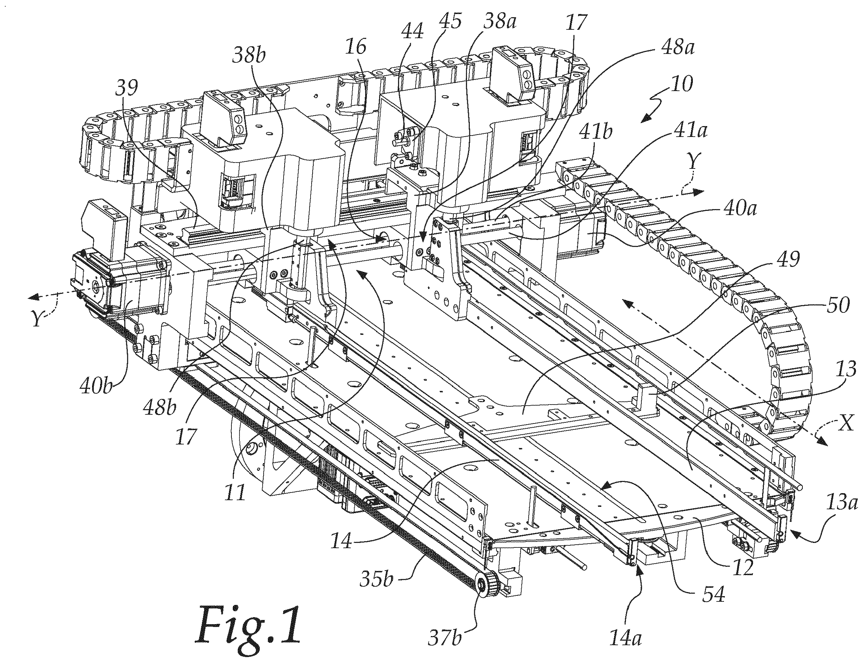

Figure 1 is an overall perspective view, partially from the front, of a handling unit for products, according to the invention;

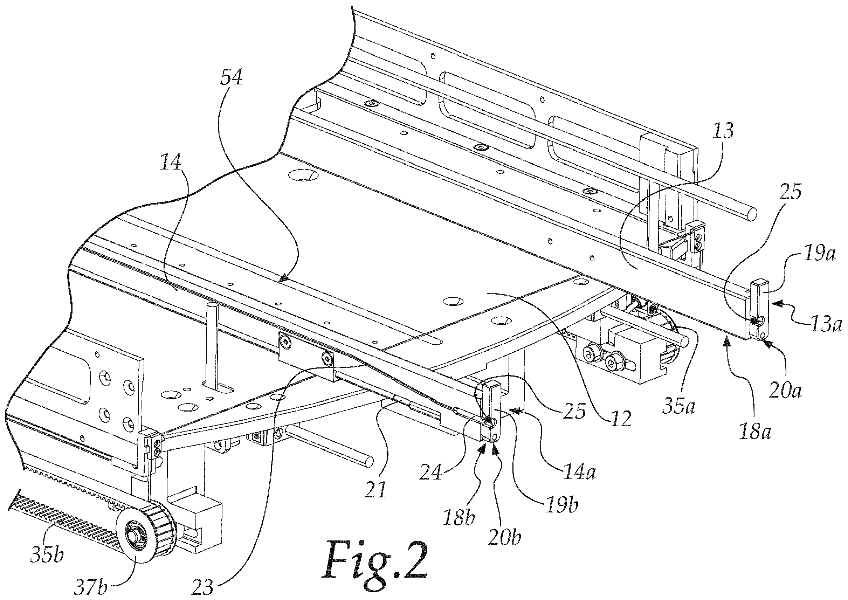

Figure 2 is a first detail view, enlarged, of the handling unit of Figure 1;
Figure 3 is a second detail view, enlarged, of the handling unit of Figure 1;
Figure 4 is a view of the handling unit of Figure 1 in which some details have been omitted;

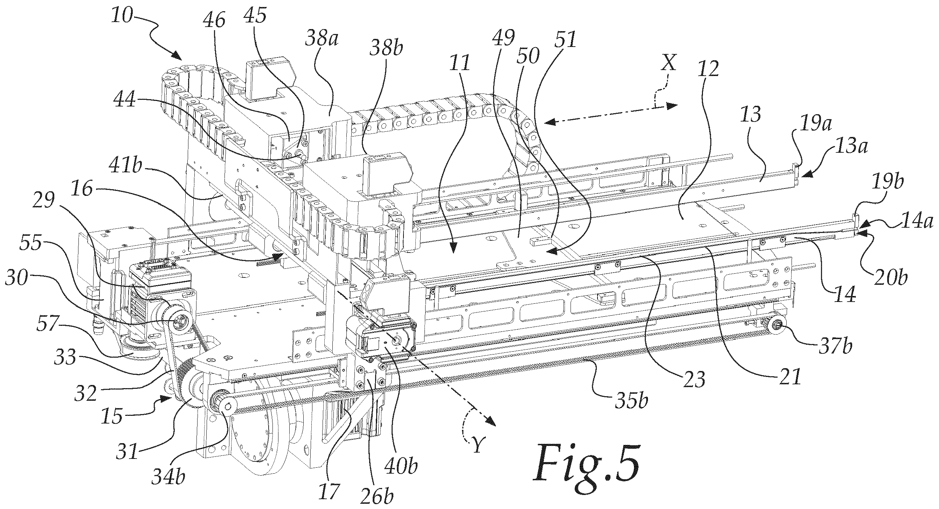

Figure 5 is a different perspective view, partially from the rear, of the handling unit of Figure 1;

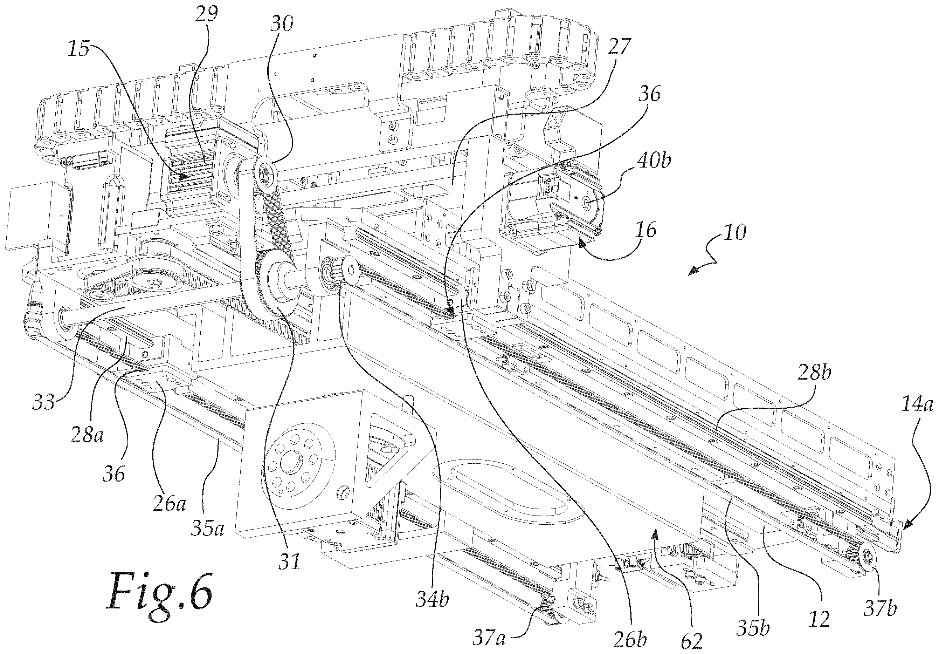

Figure 6 is an additional perspective view, partially from below, of the handling unit of Figure 1, in which some details have been omitted;

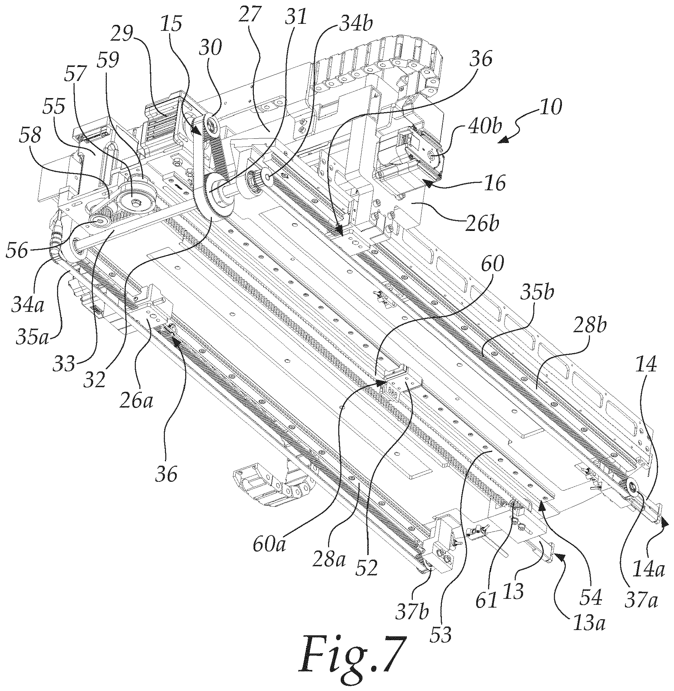

Figure 7 is a perspective view of the handling unit, according to the invention, similar to that of Figure 6, with further details omitted;

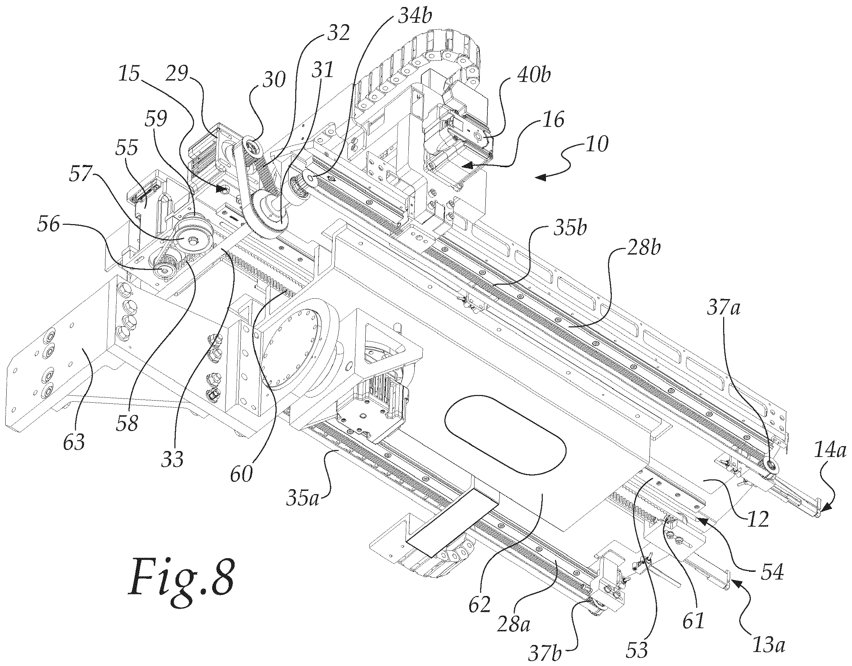

Figure 8 is a perspective view, partially from below, of the handling unit of Figure 1;
Figure 9 shows a component of the handling unit of Figure 1;
Figure 10 is a perspective view, from above, of the handling unit of Figure 1.

With reference to the figures, a handling unit for products for an automated storage system, according to the invention, is generally designated by the reference numeral 10.

The handling unit 10 comprises a gripper device 11 provided on a supporting plate 12 for such products, not shown in the figures.

Such gripper device 11 comprises:
- two opposite longitudinal grip blades, which can move independently of each other, respectively a first blade 13 and a second blade 14,
- first translation means 15 of the blades 13, 14 in a first direction X which is parallel to the direction of extension of the blades 13, 14,
- second translation means 16 of the blades 13, 14, in a second direction which is perpendicular to the first direction X and lies on a plane which is parallel to the plane of arrangement of the plate 12.

In particular, each blade 13, 14 has a free end, respectively 13a and 14a.

The handling unit 10 comprises means 17 for the controlled mutual approach/distancing of the free ends 13a, 14a of the blades 13, 14.

Such means 17 for the mutual approach/distancing of the free ends 13a and 14a of the blades 13, 14 enable the blades 13, 14 to be moved independently of each other.

The handling unit 10 comprises retractable means 18a, 18b for engagement, on the blades 13, 14, for the products.

The means for engagement 18a on the first blade 13 are independent of the means for engagement 18b on the second blade 14.

The means for engagement 18a on the first blade 13 have a drive unit that is independent of the means for engagement 18b on the second blade 14.

Advantageously, such means for engagement 18a, 18b comprise hooks 19a, 19b, each one of which is arranged at a respective free end 13a and 14a of a corresponding blade 13, 14.

Such hooks 19a, 19b have a rod-like body which is coupled, at a first end 20a, 20b, to a handling rod 21, which extends along the respective blade 13, 14, and is actuated by a respective servomotor 22.

The hooks 19a, 19b have a movement trajectory that lies on a plane that is perpendicular to the direction of extension of the blades 13, 14, and they have mutually opposite directions of movement which are directed toward the inside of the plate 12, in the configuration for use.

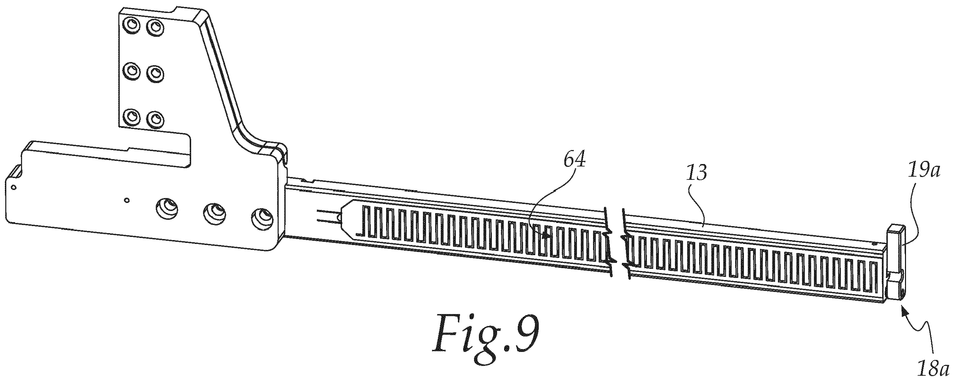

Such blades 13, 14 are fitted with a pressure sensor 64, shown in particular in Figure 9.

This pressure sensor 64 is, for example, a longitudinally extended transducer, arranged on the surface of the first blade 13 that is directed toward the second blade 14, and/or on the surface of the second blade 14 that is directed toward the first blade 13.

Such transducer is adhesive and glued onto the surface of the first blade 13, and produces an electric resistance which is variable as a function of the pressure exerted thereon, and therefore it produces a different output electrical signal according to the pressure.

Such pressure sensor 64 produces a dynamic resistance correlated to the amount of force applied.

The variation in electric resistance is inversely proportional to the force applied and it is therefore possible, with such a sensor, to detect the correct force to be applied to the product to be handled, for an effective grip in relation to factors like weight, shape, material, sliding friction of the shelves, etc.

Furthermore, the use of such a pressure sensor 64 makes it possible not to use an excessive pressure force for gripping, so preventing deformations of the product to be handled and consequent degradation and breakage thereof.

Advantageously, the handling unit 10 is provided with means for detecting the presence of any obstacles, which comprise a fiber-optic sensor 23 with a transceiver element 24 arranged at each free end 13a, 14a of the blades 13, 14.

This transceiver element 24 is adapted to emit/receive a light signal in a direction coinciding with the direction of the axis of the blades 13, 14.

Specifically, along each blade 13, 14 there is a seat for accommodating the optic fiber 23 and at the respective free end 13a and 14a there is a seat for accommodating the element 24.

Each hook 19a, 19b is provided with a recess 25, at the respective transceiver element 24, which is adapted to allow the passage of light signals from and to the transceiver element 24.

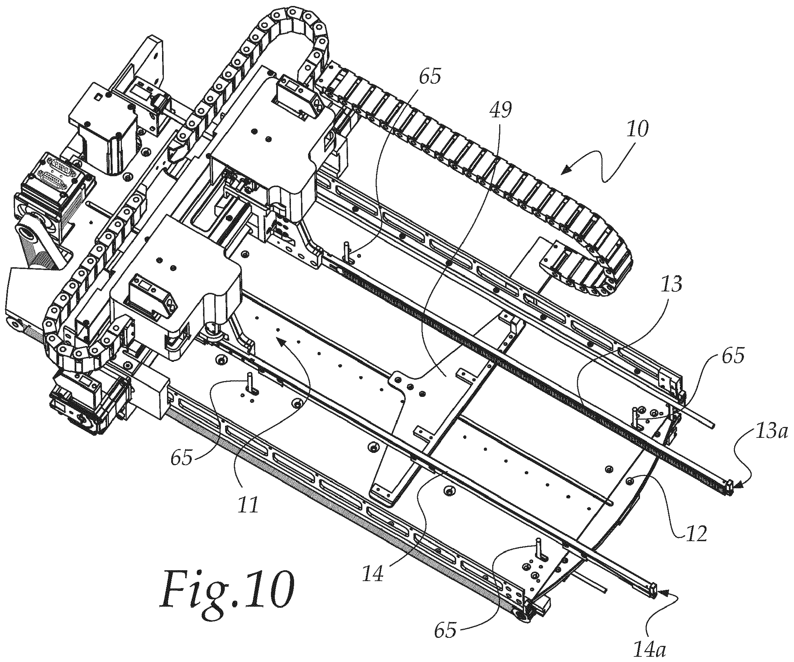

Advantageously, the handling unit 10 comprises optical means 65, for convenience indicated only in Figure 10, for the continuous detection of the alignment between the first blade 13 and the second blade 14.

These optical means 65 are, for example, two or more optical sensors, arranged on the plate 12, which make it possible to determine at any moment the angle of the second blade 14 with respect to the first blade 13, and the correct parallelism at any moment between the blades 13, 14.

This makes it possible to actuate the motor 22 in both directions, according to requirements, in order to rapidly and easily angle the second blade 14 with respect to the first blade 13 and obtain the correct parallelism between them, which is necessary for an effective use of the gripper device 11.

The first translation means 15 comprise two mutually opposite first lateral sliders 26a, 26b, which are joined by a transverse element 27 and are designed to translate on corresponding first longitudinal guides 28a, 28b.

The blades 13, 14 are associated with the transverse element 27.

The first longitudinal guides 28a, 28b extend in parallel proximate to two opposite longitudinal sides of the plate 12, on the surface of the plate 12 that is opposite to the one facing the blades 13, 14.

These first translation means 15 comprise, for the movement of the first sliders 26a, 26b:
- a first electric motor 29, on the output shaft of which a first pulley 30 is keyed,
- such first pulley 30, kinematically connected to a second pulley 31 by means of a first drive belt 32,
- such second pulley 31, keyed on a first shaft 33,
- such first shaft 33, to the ends of which two third pulleys 34a, 34b are keyed, each one of which is kinematically engaged with a second drive belt 35a, 35b,
- such second drive belt 35a, 35b, which has a portion 36 which is integrally fixed to a respective one of the first sliders 26a, 26b and is kinematically engaged:
- with a respective third pulley 34a, 34b,
- with a respective fourth pulley 37a, 37b.

In particular, each second drive belt 35a, 35b extends parallel to a respective first longitudinal guide 28a, 28b.

Furthermore the third pulleys 34a, 34b and the fourth pulleys 37a, 37b are arranged proximate to/at the corners of the plate 12, on the opposite surface of the plate 12 with respect to the surface directed toward the blades 13, 14.

The second translation means 16 comprise two second sliders 38a, 38b, each one for a respective blade 13, 14.

Each second slider 38a, 38b is coupled to the respective blade 13, 14 and to the means 17 for the controlled mutual approach/distancing of the free ends 13a, 14a of the blades 13, 14.

The second slider 38a, 38b is arranged so as to slide on a second guide 39, transverse to the first lateral guides 28a, 28b.

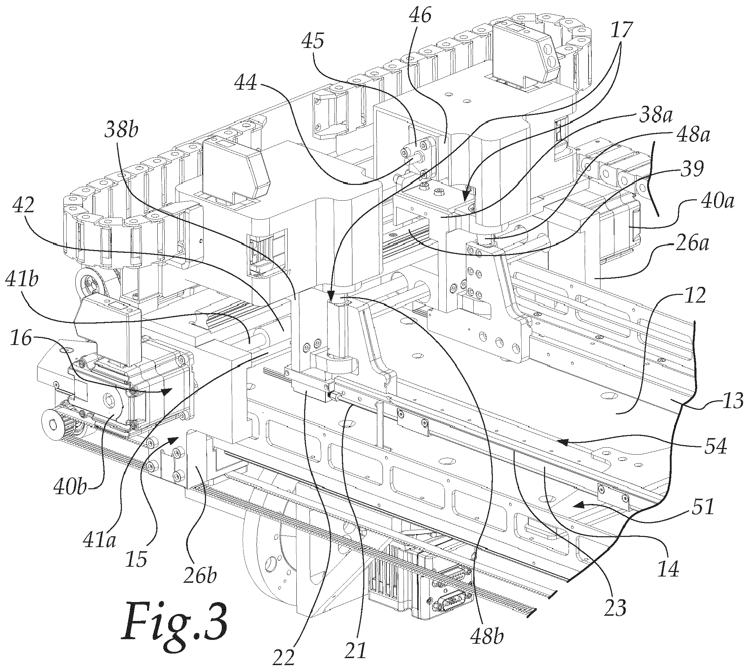

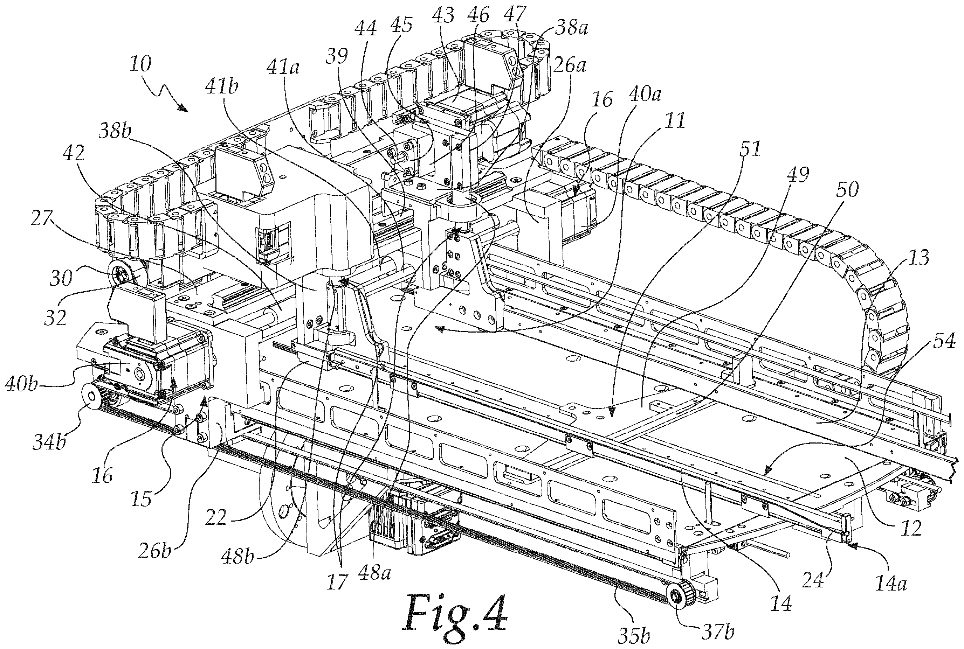

The second translation means 16 comprise, for the movement of each one of the second sliders 38a, 38b:
- a second electric motor 40a, 40b, for moving a first worm screw 41a, 41b,
- such first worm screw 41a, 41b, which is parallel to the second guide 39 and is engaged with a first nut 42 (indicated in Figures 3 and 4, only for the second slider 38b of the second blade 14, and similarly for the second slider 38a of the first blade 13),
- such first nut 42, which can slide on the first worm screw as a consequence of the rotation thereof and is integral with a respective one of the second sliders 38a, 38b.

The means 17 for the controlled mutual approach/distancing of the free ends 13a and 14a of the blades 13, 14 extend from a respective second slider 38a, 38b.

For convenience, in the figures and in particular in Figure 4, the means 17 for the mutual approach/distancing of the free ends 13a and 14a of the blades 13, 14 are indicated only for the first blade 13, but the handling unit 10 also comprises similar means 17 for the second blade 14.

The means 17 for the controlled mutual approach/distancing of the free ends 13a and 14a of the blades 13, 14 comprise for each one of them:
- a third electric motor 43,
- a second worm screw 44, driven by the third electric motor 43 and parallel to the first worm screw 41a, 41b,
- a second nut 45, which can slide on the second worm screw 44 as a consequence of the rotation thereof, integral with a block 46,

- such block 46, to which a lever 47 is pivoted,
- such lever 47, which in turn is pivoted to a respective second slider 38a, 38b, by means of a shaft/pivot 48a, 48b,
- such shaft/pivot 48a, 48b, with an axis of extension perpendicular to the plane of arrangement of the plate 12, fixed to/integral with:
- a second end of the respective blade 13, 14 which is opposite to the free end 13a, 14a,
- and with the lever 47.

It should be noted that, in the handling unit according to the invention, the presence of:
- similar first translation means 15 for the blades 13, 14,
- similar second translation means 16 for the blades 13, 14,
- and similar means 17 for the controlled mutual approach/distancing of the free ends 13a, 14a of the blades 13, 14,
enable a considerable flexibility in the positioning of the blades, including independently of each other, in order to ensure the best grip of the products according to necessity and to the characteristics of the products in terms of volume, weight and packaging material.

Furthermore, the ability to incline at least one blade with respect to the other makes it possible to generate a localized pressure at specific points.

Another of the peculiarities of the handling unit 10 is that it comprises a pusher 49, which can slide along the plate 12 and is provided with modular inserts 50 which can be varied according to need and according to the volumes, dimensions and weight of the products to be handled.

The pusher 49 comprises a flat body 51, which is parallel to the plate 12 and can slide thereon, from which one or more inserts 50 protrude.

The flat body 51 is interposed between the plate 12 and the blades 13, 14, and is fixed to and integral with a third slider 52 which can slide on a third longitudinal guide 53, which extends on the surface of the plate 12 that is opposite to the one facing the blades 13, 14.

In particular, the flat body 51 is fixed to the third slider 52 through a longitudinal through slot 54 in the plate 12.

The slot 54 extends in a substantially central portion of the plate 12.

The handling unit 10 comprises means for movement of the third slider 52 which comprise:
- a fourth electric motor 55, on the output shaft of which a fifth pulley 56 is keyed,
- such fifth pulley 56, kinematically connected to a sixth pulley 57 by means of a third drive belt 58,
- a seventh pulley 59, coaxial to the sixth pulley 57, which is kinematically engaged with a fourth drive belt 60,
- such fourth drive belt 60, which has a portion 60a which is fixed integrally to the third slider 52, and is kinematically engaged:
- with the seventh pulley 59,
- with an eighth pulley 61.

In particular, the fourth drive belt 60 extends parallel to the extension of the third guide 53.

Furthermore, the seventh pulley 59 and the eighth pulley 61 are each arranged substantially at a respective longitudinal end of the plate 12.

It should be noted that the presence of the pusher 49 with modular inserts 50, which can be varied according to need, makes it possible to handle products of considerable dimensions and encumbrances, even in the order of 200 kg.

In addition, the handling unit 10 comprises a bracket 62 for supporting the plate 12 for connection to a support 63 of the handling unit.

This bracket 62 is shaped substantially like a "triple C" in cross-section.

The bracket 62 is adapted to stiffen the structure of the handling unit and to protect the passage of electrical connection cables and data connection cables, not shown in the figures.

In particular, the bracket 62 is coupled to the support 63 at a point defining the center of rotation of the bracket 62 with respect to the support 63.

Advantageously, this point, and therefore the center of rotation of the bracket 62 with respect to the support 63, can be modified according to requirements.

According to necessity, it is possible in fact to design the center of rotation in the most suitable point, along the line of extension of the plate 12.

Depending on the point selected as the center of rotation, the dimensions and the geometry of the support 63 also vary.

It should be noted that the center of rotation of the bracket 62 with respect to the support 63, which is modifiable, allows the intersection of the trajectories of two handling units present in the same handling space i.e. the central corridor of the same robotized warehouse.

This allows for higher-performing applications in terms of speed of execution of operations, as they can be executed simultaneously, by configuring the machine with two independent handling units.

Furthermore, there is greater reliability owing to the redundancy of the two handling units which are completely equivalent in terms of functionality and performance.

In practice it has been found that the handling unit according to the invention fully achieves the intended aim and objects, being capable of handling a wide variety of products, from the considerably large to the particularly small.

According to the invention, a handling unit is provided which makes it possible to perform a secure and stable grip of products of considerable weight and dimensions, using a pressure that is less than that necessary in similar, conventional handling units.

According to the invention a handling unit is devised which makes it possible to generate a localized pressure on the blades of the gripper device only at the product of interest, and to vary such pressure according to the weight and volume of the product to be moved.

Moreover, according to the invention a handling unit is provided which makes it possible to push products, even of considerable dimensions, easily and quickly during loading or picking.

Finally, according to the invention a handling unit is devised which makes it possible to reduce the need for, and the number of, operators in the warehouse.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102023000004122 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A handling unit (10), comprising a gripper device (11) provided on a supporting plate (12) for products, said gripper device (11) comprising:
- two opposite longitudinal grip blades (13, 14), which can move independently of each other, each one of said blades (13, 14) having a free end (13a, 14a),
- first translation means (15) of said blades (13, 14) in a first direction (X) which is parallel to the direction of extension of said blades (13, 14),
- second translation means (16) of said blades (13, 14), in a second direction which is perpendicular to said first direction (X) and lies on a plane which is parallel to the plane of arrangement of said plate (12),
- means (17) for the controlled mutual approach/distancing of the free ends (13a, 14a) of said blades (13, 14),
said handling unit (10) being **characterized in that** it comprises retractable means (18a, 18b) for engagement on said blades (13, 14) for said products.

2. The handling unit (10) according to claim 1, **characterized in that** said means (18a, 18b) for engagement comprise hooks (19a, 19b), each one of said hooks (19a, 19b) being arranged at a respective free end (13a, 14a) of a corresponding one of said blades (13, 14).

3. The handling unit (10) according to claim 2, **characterized in that** said hooks (19a, 19b) have a rod-like body which is coupled at a first end (20a, 20b) to a handling rod (21), said rod (21) extending along a respective one of said blades (13, 14) and being actuated by a respective servomotor (22), said hooks (19a, 19b) having a movement trajectory that lies on a plane that is perpendicular to the direction of extension of said blades (13, 14), said hooks (19a, 19b) having mutually opposite directions of movement which are directed toward the inside of said plate (12) in the configuration for use.

4. The handling unit (10) according to claim 1, **characterized in that** said blades (13, 14) comprise a pressure sensor.

5. The handling unit (10) according to one or more of the preceding claims, **characterized in that** it comprises means for detecting the presence of any obstacles, which comprise a fiber-optic sensor (23) with a transceiver element (24) arranged at said free end (13a, 14a) of said blades (13, 14).

6. The handling unit (10) according to one or more of the preceding claims, **characterized in that** along each one of said blades (13, 14) a seat for accommodating said optical fiber (23) is provided and at the respective free end (13a, 14a) a seat for accommodating said transceiver element (24) is provided, each one of said hooks (19a, 19b) having a recess (25) at said transceiver element (24).

7. The handling unit (10) according to one or more of the preceding claims, **characterized in that** it comprises optical means (65) for a continuous detection of an alignment between a first blade (13) and a second blade (14) of said blades.

8. The handling unit (10) according to claim 7, **characterized in that** said optical means (65) are constituted by two or more optical sensors arranged on said plate (12).

9. The handling unit (10) according to claim 1, **characterized in that** said first translation means (15) comprise two mutually opposite first lateral sliders (26a, 26b) joined by a transverse element (27) and designed to translate on corresponding first longitudinal guides (28a, 28b), said blades (13, 14) being associated with said transverse element (27), said first longitudinal guides (28a, 28b) extending in parallel proximate to two opposite longitudinal sides of said supporting plate (12), on a surface of said supporting plate (12) that is opposite to a surface thereof facing said blades (13, 14).

10. The handling unit (10) according to one or more of the preceding claims, **characterized in that** said first translation means (15) comprise, for moving said first sliders (26a, 26b):
- a first electric motor (29), on the output shaft of which a first pulley (30) is keyed,
- said first pulley (30), kinematically connected to a second pulley (31) by means of a first drive belt (32),
- said second pulley (31), keyed on a first shaft (33),
- said first shaft (33), to the ends of which two third pulleys (34a, 34b) are keyed, each one of which is kinematically engaged with a second drive belt (35a, 35b),
- said second drive belt (35a, 35b), with a portion (36) which is integrally fixed to a respective one of said first sliders (26a, 26b) and is kinematically engaged:
- with a respective one of said third pulleys (34a, 34b),
- with a respective fourth pulley (37a, 37b).

11. The handling unit (10) according to one or more of the preceding claims, **characterized in that** said second translation means (16) comprise two second sliders (38a, 38b), each one for a respective one of said blades (13, 14), a respective one of said blades (13, 14) and said means (17) for the controlled mutual approach/distancing of said free ends (13a, 14a) of said blades (13, 14) being coupled to each one of said second sliders (38a, 38b), each one of said second sliders (38a, 38b) being arranged so as to slide on a second guide (39) which is transverse to said first guides (28a, 28b).

12. The handling unit (10) according to one or more of the preceding claims, **characterized in that** said second translation means (16) comprise, for the movement of each one of said second sliders (38a, 38b):
- a second electric motor (40a, 40b), for moving a first worm screw (41a, 41b),
- said first worm screw (41a, 41b), which is parallel to said second guide (39) and is engaged with a first nut (42),
- said first nut (42), which can slide on said first worm screw (41a, 41b) as a consequence of the rotation thereof and is integral with a respective one of said second sliders (38a, 38b).

13. The handling unit (10) according to one or more of the preceding claims, **characterized in that** said means (17) for the controlled mutual approach/distancing of said free ends (13a, 14a) of said blades (13, 14) extend from a respective one of said second sliders (38a, 38b) and comprise, for each one of said free ends (13a, 14a):
- a third electric motor (43),
- a second worm screw (44), driven by said third electric motor (43) and parallel to said first worm screw (41a, 41b),
- a second nut (45), which can slide on said second worm screw (44) as a consequence of the rotation thereof and is integral with a block (46),
- said block (46), to which a lever (47) is pivoted,
- said lever (47), in turn pivoted to a respective one of said second sliders (38a, 38b) by means of a shaft/pivot (48a, 48b),
- said shaft/pivot (48a, 48b), with an axis of extension perpendicular to the plane of arrangement of said supporting plate (12), fixed to/integral with:
- a second end of the respective one of said blades (13, 14) which is opposite said free end (13a, 14a),
- and said lever (47).

14. The handling unit (10) according to claim 1, **characterized in that** it comprises a pusher (49), which can slide along said supporting plate (12) and is provided with one or more modular inserts (50).

15. The handling unit (10) according to one or more of the preceding claims, **characterized in that** said pusher (49) comprises a flat body (51) which is parallel to said supporting plate (12) and can slide thereon, said flat body (51) being interposed between said supporting plate (12) and said blades (13, 14), said flat body (51) being fixed to and integral with a third slider (52) which can slide on a third longitudinal guide (53), which extends on the surface of said supporting plate (12) that is opposite to the one facing said blades (13, 14), said flat body (51) being fixed to said third slider (52) through a longitudinal through slot (54) in said supporting plate (12), said slot (54) extending along a substantially central portion of said supporting plate (12).

16. The handling unit (10) according to one or more of the preceding claims, **characterized in that** it comprises movement means of said third slider (52) which comprise:
- a fourth electric motor (55), on the output shaft of which a fifth pulley (56) is keyed,
- said fifth pulley (56), kinematically connected to a sixth pulley (57) by means of a third drive belt (58),
- a seventh pulley (59), coaxial to said sixth pulley (57), which is kinematically engaged with a fourth drive belt (60),
- said fourth drive belt (60), which has a portion (60a) which is fixed integrally to said third slider (52), and is kinematically engaged:
- with said seventh pulley (59),
- with an eighth pulley (61).

17. The handling unit (10) according to one or more of the preceding claims, **characterized in that** it comprises a bracket (62) for supporting said supporting plate (12) for connection to a support (63) of said handling unit (10), said bracket (62) extending longitudinally and being shaped substantially like a "triple C" in cross-section, said bracket (62) being coupled to said support (63) at a point defining the center of rotation of said bracket (62) with respect to said support (63).
